## Europäisches Patentamt

## European Patent Office

## Office européen des brevets

(11) Veröffentlichungsnummer: **0 137 360**
A2

# EUROPÄISCHE PATENTANMELDUNG

(21) Anmeldenummer: **84111057.0**

(22) Anmeldetag: **17.09.84**

(51) Int. Cl.⁴: **C 08 F 14/06**
C 08 F 2/16, C 08 L 27/06
C 08 L 51/00, C 08 K 3/00
H 01 M 2/16

(30) Priorität: **24.09.83 DE 3334667**

(43) Veröffentlichungstag der Anmeldung:
**17.04.85 Patentblatt 85/16**

(84) Benannte Vertragsstaaten:
**BE DE FR GB IT NL**

(71) Anmelder: **HOECHST AKTIENGESELLSCHAFT**
**Postfach 80 03 20**
**D-6230 Frankfurt am Main 80(DE)**

(72) Erfinder: **Engelmann, Manfred, Dr.**
**Kantstrasse 5**
**D-8269 Burgkirchen(DE)**

(72) Erfinder: **Plewan, Otto**
**Bischof-Sailer-Strasse 15**
**D-8265 Neuötting(DE)**

(72) Erfinder: **Kraus, Helmut, Dr.**
**Donaustrasse 32b**
**D-8266 Töging(DE)**

(72) Erfinder: **Mielke, Ingolf, Dr.**
**Hochstaufenstrasse 16**
**D-8269 Burgkirchen(DE)**

(54) Verfahren zur Herstellung und Verwendung einer sinterfähigen, feinteiligen Formmasse auf Basis Polyvinylchlorid.

(57) Es wird ein Verfahren zur Herstellung einer sinterfähigen, feinteiligen Formmasse auf Basis von Polyvinylchlorid beschrieben: Vinylchlorid wird in Gegenwart eines Suspendiermittels und eines Aktivators in wäßriger Suspension, gegebenenfalls in Gegenwart von Comonomeren, Polymeren, die zur Pfropfung geeignet sind, Emulgatoren und/oder weiteren Polymerisationshilfsstoffen polymerisiert. Vor der Trocknung wird dem Polymerisat mindestens ein nichtionogenes oder amphoteres Netzmittel und mindestens eine Säure, die nicht oberflächenaktiv ist und einen pKs-Wert von höchstens 3 aufweist, zugesetzt und dann getrocknet.

Die so erhaltene Formmasse kann zu gesinterten Formkörpern, beispielsweise Platten, verarbeitet werden, die sich durch verbesserte Reißfestigkeit, Bruchdehnung und Farbe auszeichnen.

0137360

HOECHST AKTIENGESELLSCHAFT    HOE 83/F 911    Dr.S-al

Verfahren zur Herstellung und Verwendung einer sinterfähigen, feinteiligen Formmasse auf Basis Polyvinylchlorid

Die Erfindung betrifft ein Verfahren zur Herstellung einer sinterfähigen, feinteiligen Formmasse durch Homo-, Co- oder Pfropf-Polymerisation von Vinylchlorid, gegebenenfalls in Gegenwart von Comonomeren oder Polymeren, die mit Vinylchlorid pfropfpolymerisierbar sind, in wäßriger Suspension, wobei vor der Trocknung dem Polymerisat mindestens ein nicht-ionogenes oder amphoteres Netzmittel und mindestens eine nicht oberflächenaktive Säure zugesetzt wird. Die Erfindung betrifft ferner die Verwendung solcher Formmassen zur Herstellung von Separatorplatten für elektrische Zellen.

Es ist bekannt, Polyvinylchlorid zur Herstellung von gesinterten Formkörpern, beispielsweise von Separatorplatten für elektrische Zellen einzusetzen. Verfahren zur Herstellung entsprechend geeigneter Formmassen wurden in den deutschen Offenlegungsschriften 21 27 654, 23 10 431, 24 02 314, 26 46 595 und 30 18 922 beschrieben und in der deutschen Patentanmeldung P 32 47 472.5 vorgeschlagen. Insbesondere die gemäß den drei letztgenannten deutschen Offenlegungsschriften hergestellten Formmassen ergeben gesinterte Formkörper, beispielsweise Separatorplatten mit vergleichsweise guten mechanischen Eigenschaften wie Reißfestigkeit und Reißdehnung sowie annehmbare Farbe. Die moderne Serienfertigung von elektrischen Zellen, wie auch erhöhte Anforderungen an solche Zellen im späteren Gebrauch, machen es jedoch wünschenswert, Separatorplatten mit noch weiter verbesserten mechanischen Eigenschaften zu haben. Aus optischen Gründen wird eine besonders helle Farbe der gesinterten Platten vorgezogen, um Verunreinigungen und Fehler leichter zu erkennen. Aufgabe der vorliegenden Erfindung ist es demnach, ein Verfahren zur Verfügung zu stellen, das die Herstellung sinterfähiger, feinteiliger Formmassen ermöglicht, die Sinterkörper, zum Beispiel Separatorplatten für elektrische Zellen, mit verbesserten mechanischen Eigenschaften und verbesserter Farbe ergeben. Diese Aufgabe wird gelöst durch ein Verfahren zur Herstellung einer sinterfähigen, feinteiligen Formmasse auf Basis Polyvinylchlorid mit einem K-Wert von 55 bis 90, einem Schüttgewicht von 400 bis 700 g/dm³, einer mittleren Korngröße von 10 bis 50 μm und einer Kornverteilung von:

$$99 \text{ bis } 30 \text{ Gew.-\% } < 33 \text{ μm}$$
$$1 \text{ bis } 60 \text{ Gew.-\% von } 33 \text{ bis } 63 \text{ μm}$$
$$0 \text{ bis } 9 \text{ Gew.-\% von } 63 \text{ bis } 125 \text{ μm und}$$
$$0 \text{ bis } 1 \text{ Gew.-\% } > 125 \text{ μm}$$

durch Homopolymerisation von Vinylchlorid oder Copolymerisation von Vinylchlorid mit einem Monomeren, das mit Vinylchlorid copolymerisierbar ist, oder Pfropfpolymerisation von Vinylchlorid mit einem Polymeren, das mit Vinylchlorid pfropfpolymerisierbar ist, in wäßriger Suspension in Gegenwart von mindestens einem öllöslichen, radikalisch zerfallenden Aktivator, mindestens einem Suspensionsstabilisator, gegebenenfalls mindestens einem Emulgator und weiteren Polymerisations-Hilfsstoffen, nach Beendigung der Polymerisation Abtrennen der Hauptmenge der wäßrigen Phase und Trocknung des Polymerisates, wobei vor der Trocknung dem Polymerisat mindestens ein nicht-ionogenes oder amphoteres Netzmittel und mindestens ein weiterer Stoff zugegeben werden, welches dadurch gekennzeichnet ist,

daß als weiterer Stoff mindestens eine nicht oberflächenaktive Säure zugesetzt wird, deren pKs-Wert in wäßriger
Lösung bei 20 °C höchstens 3 beträgt.

Unter nicht oberflächenaktiver Säure ist eine solche Säure
zu verstehen, deren 0,5-gew.-%ige klare Lösung in Wasser
bei 20 °C eine größere Oberflächenspannung als 0,45 mN/cm
aufweist. Solche Stoffe gelten nach der Nomenklatur des Rates für die Zusammenarbeit auf dem Gebiet des Zollwesens
(NRZZ) Verlag Bundesanzeiger/Köln, Teil I, Nr. 34.02, zweiter Absatz, als nicht oberflächenaktive Stoffe.

Säuren, deren pKs-Wert oberhalb 3 liegt, ergeben den erfindungsgemäßen Effekt nicht oder nur in geringem Maß.
Vorzugsweise werden Säuren eingesetzt, deren pKs-Wert bei
0,5 bis 2,5 liegt. Besonders bevorzugt werden saure Verbindungen des Phosphors und Schwefels, wie Schwefelsäure,
saures Natriumsulfat, Monoester der Schwefelsäure, schweflige Säure, phosphorige Säure, o-Phosphorsäure, Pyrophosphorsäure, Ester der Phosphorsäuren verwendet, wobei insbesondere mit den sauren Verbindungen des Phosphors gute
Ergebnisse erhalten werden.
Der pKs-Wert ist der negative Logarithmus zur Basis 10
der Dissoziationskonstante der Säure in Wasser, bezogen auf die
Konzentration in mol/dm³. Unter "Säure" im Sinne der Erfindung sind Verbindungen zu verstehen, die in wäßriger Lösung $H^+$-Ionen abspalten, also neben den eigentlichen Säuren auch sauer reagierende Verbindungen, wie beispielsweise Teilester oder saure Salze. Ein pKs-Wert von höchstens
3 schließt auch Säuren ein, die einen negativen pKs-Wert
besitzen, das heißt, etwa den Bereich von -9,5 bis +3.

Bevorzugt wird eine Säure eingesetzt, die bei 120 °C
wenig flüchtig ist. Unter "wenig flüchtige Säure" ist
eine solche zu verstehen, die bei 120 °C einen Partial-
Dampfdruck von weniger als 0,01 MPa aufweist. Säuren,
die unterhalb 120 °C stärker flüchtig sind, können zu Schwierigkeiten bei der Herstellung und Verarbeitung der Formmasse führen.

Anstelle einer erfindungsgemäß einzusetzenden Säure kann auch ein Gemisch mehrerer solcher Säuren verwendet werden, sofern das Gemisch die weiter oben ausgeführten Bedingungen einhält. Auf das trockene Polymerisat bezogen, werden 0,01 bis 5 Gew.-% Säure beziehungsweise Säuregemisch zugegeben. Unterhalb 0,01 Gew.-% wird im allgemeinen der erfindungsgemäße Effekt nicht mehr erzielt, oberhalb 5 Gew.-% wird kein zusätzlicher Effekt mehr festgestellt, ein höherer Zusatz würde unnötige Kosten verursachen und weitere Probleme, zum Beispiel Korrosion, mit sich bringen.

Die Zugabe der Säure kann bereits während der Polymerisation erfolgen, wenn ein größerer Teil des Vinylchlorids, beispielsweise 50 Gew.-%, in Polymeres umgesetzt worden ist. Vorzugsweise wird die Säure jedoch nach Beendigung der Polymerisation und insbesondere nach Abtrennung der Hauptmenge der wäßrigen Phase, jedoch vor der Trocknung des Polymeren, zugegeben. Vorteilhaft kann auch ein Teil der Säuremenge vor, der Rest nach Abtrennung der Hauptmenge der wäßrigen Phase dem Polymerisat zugesetzt werden. Die letztgenannten Maßnahmen haben den Vorteil, daß die Säure besser wirkt, so daß die verwendete Menge geringer gehalten werden kann.

Bei der Säurezugabe wird das Polymere zweckmäßig, beispielsweise durch Rühren, Umschaufeln oder Herabrieselnlassen, bewegt. Sofern die Hauptmenge der wäßrigen Flotte vom Polymerisat vor dem Säurezusatz abgetrennt wurde, empfiehlt es sich, die Säure in feinverteilter Form als mehr oder weniger verdünnte Lösung in Wasser mit dem feuchten Polymerisatkuchen zu vermischen. Anschließend wird das Polymerisat nach üblichen Verfahren, beispielsweise mittels eines Stromtrockners oder anderer geeigneter Trockenaggregate, eine ausreichende Zeit bei erhöhter Temperatur (etwa 30 bis 100 °C) gehalten, um das Wasser zu entfernen.

Nach der Trocknung ist im allgemeinen die sinterfähige, feinteilige Formmasse gebrauchsfertig. Es können ihr in besonderen Fällen geringe Mengen bestimmter Stoffe, beispielsweise Antioxidantien, Thermostabilisatoren, Pigmente oder Mittel zur Verbesserung der antistatischen Eigenschaften, sofern erforderlich, beigemischt werden.

Sofern die nach dem neuen Verfahren erzeugte sinterfähige, feinteilige Formmasse zur Herstellung von Separatorplatten für Akkumulatoren, insbesondere Bleiakkumulatoren, verwendet werden soll, wird vorzugsweise zur Herstellung der Formmasse eine Säure beziehungsweise ein Säuregemisch eingesetzt, welches keine reduzierenden Eigenschaften aufweist oder diese durch den Kontakt mit Luft spätestens bei den zum Sintern angewendeten Temperaturen (180 bis 250 °C) verliert. Für diesen Anwendungszweck ist beispielsweise die Schwefelsäure der schwefligen Säure beziehungsweise die Phosphorsäure der unterphosphorigen Säure oder phosphorigen Säure vorzuziehen.

Ferner werden die Formmassen, welche zur Herstellung von Separatorplatten für Akkumulatoren, insbesondere Bleiakkumulatoren, verwendet werden, vorteilhaft mit solchen Säuren und Säuregemischen hergestellt, welche keine Schwermetalle, wie zum Beispiel Chrom, Arsen, Selen oder Tellur enthalten.

Wie bereits erwähnt, können anstelle der freien Säuren auch saure Salze, insbesondere des Natriums, Kaliums oder Ammoniums oder Teilester mehrbasischer Säuren eingesetzt werden, sofern diese, wie oben beschrieben, nicht oberflächenaktiv sind und deren pKs-Wert höchstens 3 beträgt.

Unter sinterfähiger, feinteiliger Formmasse auf Basis Polyvinylchlorid wird eine solche Formmasse verstanden, die mindestens 70 Gew.-%, vorzugsweise mindestens 80 Gew.-%, und insbesondere über 98 Gew.-%,polymerisierte Einheiten des Vinylchlorids enthält. Die Polymerisation erfolgt in wäßriger Suspension in Gegenwart von mindestens einem, für die Polymerisation von Vinylchlorid als geeignet bekannten öllöslichen, radikalisch zerfallenden Aktivator, mindestens einem für die Suspensionspolymerisation von Vinylchlorid als geeignet bekannten Suspensionsstabilisator, gegebenenfalls mindestens einem für die Polymerisation von Vinylchlorid als geeignet bekannten Emulgator und gegebenenfalls weiteren Polymerisations-Hilfsstoffen.

Geeignete Aktivatoren (auch als Polymerisations-Initiatoren bezeichnet) und Suspensionsstabilisatoren sind beispielsweise beschrieben in den deutschen Offenlegungsschriften 23 10 431 und 21 27 654, wobei insbesondere die Zelluloseether und -ester gute Ergebnisse bringen. In der letztgenannten Schrift sind auf den Seiten 2 und 3 auch Beispiele für geeignete Emulgatoren angegeben, wobei die Emulgatoren als: "anionenaktive Netzmittel, die als zusätzliche Suspensionsstabilisatoren verwendet werden können" bezeichnet sind. Weitere geeignete Aktivatoren (dort als Katalysatoren bezeichnet) sowie Suspensionsstabilisatoren (dort als Schutzkolloide bezeichnet), Emulgatoren und weitere Polymerisations-Hilfsstoffe sind beispielsweise beschrieben in der DE-OS 31 49 320, Seite 28, Absatz 1; Seite 29, Absatz 2, Zeilen 34 und 35; Seite 30, Zeilen 1 bis 10 und 17 bis 21.

Als Suspensionsstabilisatoren (Schutzkolloide) werden vorzugsweise Celluloseether und -ester eingesetzt.

Für die Copolymerisation mit Vinylchlorid geeignete Monomere sowie für die Pfropfpolymerisation mit Vinylchlorid geeignete Polymere sind beispielsweise beschrieben in der deutschen Offenlegungsschrift 31 49 320 auf Seite 27, die Angabe geeigneter Polymerisationstechniken findet sich beispielsweise in der gleichen Schrift auf Seite 26, Zeilen 13 bis 33.

Das nicht-ionogene oder amphotere Netzmittel kann bereits während der Polymerisation zugegeben werden, vorteilhaft wird es jedoch nach Beendigung der Polymerisation und insbesondere nach Abtrennung der Hauptmenge der wäßrigen Phase dem Polymerisat in Mengen von 0,005 bis 1 Gew.-%, vorzugsweise 0,01 bis 0,3 Gew.-%, bezogen auf trockenes Polymerisat, zugesetzt. Als nicht-ionogene Netzmittel sind beispielsweise geeignet Sorbitanfettsäureester, Polyoxyethylensorbitanfettsäureester, Polymerisate von Alkylenoxiden, wie Ethylen- oder Propylenoxid, Copolymerisate von Alkylenoxiden, wie Ethylen- oder Propylenoxid, sowie Alkyl- und Arylether; Alkyl- und Arylester von Polymerisaten beziehungsweise Copolymerisaten der genannten Ethylenoxide. Geeignete amphotere Netzmittel sind beispielsweise solche, die bei 20 °C zu mehr als 2 Gew.-% in Wasser löslich sind, 12 bis etwa 80 C-Atome und ein quartäres N-Atom enthalten, welches mit einer Carbon- oder Sulfonsäuregruppe ein Salz bildet. Unter einem "quartären N-Atom" ist ein N-Atom zu verstehen, das eine positive Ladung trägt und 4 Bindungen betätigt, wovon 1 bis 4 Bindungen mit C-Atomen und der Rest (3 bis 0) Bindungen mit H-Atomen sind.

Vorzugsweise einzusetzende Netzmittel sind beschrieben in der DE-OS 30 18 922, Seite 10, Zeile 19, bis Seite 11, Zeile 20.

Gegenstand der Erfindung ist ferner die Verwendung der nach dem neuen Verfahren erzeugten sinterfähigen, feinteiligen Formmassen zur Herstellung gesinterter Formkörper, insbesondere von Separatorplatten für elektrische Zellen.

Die erfindungsgemäß hergestellten Formmassen zeichnen sich durch verbesserte Sintereigenschaften aus. Sie ergeben Separatorplatten mit verbesserter Reißfestigkeit, Reißdehnung und Farbe gegenüber solchen Separatorplatten, die mit vergleichbaren, nach dem Stand der Technik hergestellten Formmassen erzeugt wurden. Ein weiterer für die Qualitätsprüfung der Separatorplatten wichtiger Vorteil ist die geringere Leitfähigkeit der feuchten Platten, die mit erfindungsgemäß erzeugten Formmassen gewonnen wurden.

Nachfolgende Beispiele sollen die Erfindung näher erläutern. Die angegebenen Meßwerte werden wie folgt ermittelt:

Herstellung der Sinterplättchen:
-------------------------------------------

Die Herstellung der Separatorplatten erfolgt auf einer kontinuierlichen Bandsinteranlage. Dabei wird auf ein endloses Stahlband Polyvinylchlorid-Pulver in bestimmter Schichtdicke aufgetragen und zur Sinterung durch einen Ofen geleitet, in dem Heißluft von 230 °C strömt.

Durch Variation der Bandgeschwindigkeit kann die Verweilzeit in der Sinterzone und damit die Stärke der Sinterung des PVC-Pulvers geregelt werden.

Die Bandgeschwindigkeit wird auf Werte zwischen 2,5 bis 2,9 m/min, vorzugsweise 2,7 m/min, eingestellt, so daß sich für die fertige Separatorplatte ein elektrischer Widerstand von 1,6 m$\Omega$/dm² ergibt. Die Separatorplatten werden mit einer Blattstärke von 0,30 mm und einer Rippenstärke von 1,1 mm hergestellt.

Reißdehnung und Reißfestigkeit:
-----------------------------------

In Anlehnung an die DIN-Vorschrift 53 455 - Zugversuch von Kunststoffen - wird die Reißdehnung (Dehnung bei Reißkraft) und die Reißfestigkeit bestimmt. Da keine genormten Probekörper zur Verfügung stehen, werden aus den gesinterten Platten Prüflinge der Größe 60 x 140 mm geschnitten. Die Prüfung erfolgt auf einer Zugprüfmaschine entsprechend den allgemeinen Bedingungen für Zugprüfmaschinen (DIN 51 220, Klasse 1 sowie DIN 51 221) nach 16stündiger Lagerung im Normklima (DIN 50014/1) bei 23 ± 2 °C und 50 ± 5 % relativer Luftfeuchtigkeit. Die Prüfgeschwindigkeit (Geschwindigkeit, mit der sich die beiden Einspannklemmen voneinander entfernen) beträgt 50 mm/min ± 10 %. Der Kraftmeßbereich liegt bei 10 N. Die Aufzeichnung von Kraft und Dehnung erfolgt über ein Schreibwerk auf einer Diagrammrolle. Der dehnungsproportionale Vorschub (Diagrammpapier: Traverse) wird auf 5 : 1 vergrößert eingestellt. Die Dehnung ist auf 100 mm freie Einspannlänge bezogen.

Kapillare Steighöhe:

Als Maß für die Benetzbarkeit der Separatorplatten und zur Charakterisierung der Porosität dient die Ermittlung der kapillaren Steighöhe. Dabei wird ein 1 cm breiter Streifen des Separators in eine Proberöhre gestellt, die 1,5 cm hoch mit Wasser gefüllt ist. Als kapillare Steighöhe wird die Höhe der Benetzbarkeit in mm nach einer Tauchzeit von 10 min angegeben.

Spezifischer elektrischer Widerstand:
----------------------------------------

Die Ermittlung des elektrischen Widerstandes von Separatoren erfolgt über Messung des sogenannten Innenwiderstandes von Zellen, die in einer eigens dafür geschaffenen Prüfanordnung (Batteriezelle) gemessen wird. Die Differenz des Zellenwiderstandes mit und ohne Separator ergibt den Widerstand des Trennkörpers. Durch Multiplikation mit dem Quotienten aus Plattenfläche durch Plattendicke wird der spezifische Durchgangswiderstand in $\Omega \cdot cm$ ermittelt.

Die Prüfzelle selbst besteht aus einer positiven und einer negativen Platte ($PbO_2$ und $Pb$), die im Abstand von 7 mm parallel zueinander angebracht sind. Als Elektroden nimmt man Platten solcher Größe und Bauart, wie sie beim Blei-Akkumulator verwendet werden. Genau zwischen den Elektroden, in einer fensterförmigen Aussparung der Größe 100 x 100 mm befindet sich der Separator. Die Prüfzelle ist mit Schwefelsäure der Dichte 1,28 gefüllt und voll aufgeladen. Die Messung solcher niederohmigen Innenwiderstände wird mit einem direkt anzeigenden Mikro-Ohmmeter (Type EMT 326, Firma Elektromeßtechnik W. Franz KG, Lahr) vorgenommen, welches an den beiden Elektroden angeschlossen ist. Sie erfolgt mit Netz-Wechselstrom.

Farbe:
--------

Die Beurteilung erfolgt visuell nach folgender Notenskala:

Note 1   elfenbein
Note 2   hellbeige
Note 3   hellrosa
Note 4   rosa mit beige
Note 5   violettrosa (fliederfarbig)
Note 6   mittelbraun
Note 7   dunkelbraun
Note 8   dunkelbraun bis olivgrün.

Vergleichsversuch A und Beispiele 1 bis 4

Ein Gemisch, bestehend aus 440 Gew.-Teilen Vinylchlorid 870 Gew.-Teilen entsalztem Wasser 2,2 Gew.-Teilen Methylcellulose (Viskosität 440 mPa·s
    2 gew.-%ige Lösung bei 20 °C) 0,66 Gew.-Teilen n-Dodecylbenzolsulfosäure 0,088 Gew.-Teilen Diisopropylperoxydicarbonat wird in einem Kessel von 1500 dm³ Inhalt (aus VA-Stahl, ausgerüstet mit Impellerrührer) 7 Stunden bei 59 °C und 150 U/min polymerisiert. Nach Beendigung der Polymerisation und Entspannen des Polymerisationskessels werden bei den Beispielen 1 und 3 dem Kesselinhalt die jeweils aus nachfolgender Tabelle ersichtlichen Stoffe in den angegebenen Mengen (Gew.-%, bezogen auf erzeugtes trockenes Polymerisat) zugesetzt, diese Mischung einer üblichen Behandlung zur intensiven Entfernung restlicher Monomerer unterzogen und anschließend auf einem Dekanter abzentrifugiert. Beim Vergleichsversuch A sowie den Beispielen 2 und 4 wird nach Entspannen des Polymerisationsansatzes die Intensivbehandlung zur Entfernung restlicher Monomerer vorgenommen und ebenfalls abzentrifugiert. In beiden Fällen enthält das so erhaltene Produkt noch ca. 35 Gew.-% Wasser. Beim Vergleichsversuch A sowie den Beispielen 2 und 4 werden nun dem abzentrifugierten Produkt vor seinem Einlauf in den Stromtrockner die in der Tabelle angegebenen Stoffarten und Mengen zugesetzt. Hierzu wird eine 5 gew.-%ige wäßrige Lösung der angegebenen Stoffe über eine Düse auf das feuchte Produkt gesprüht, wobei letzteres umgerührt wird. Das behandelte Polymerisat wird anschließend in allen Fällen in einem Stromtrockner mit Heißluft (Eingang 150 °C, Ausgang 85 °C) getrocknet.

An dem so hergestellten Polymerisat werden folgende
Werte ermittelt:

|  |  |
|---|---|
| K-Wert | 65,3 |
| Schüttgewicht (g/dm³) | 400 |
| Weichmacheraufnahme | |
| Dioctylphthalat (Gew.-%) | 15 |
| mittlerer Korndurchmesser (µm) | 22 |
| Siebanalyse (%) < 33 µm | 89,0 |
| von 33 bis 63 µm | 10,0 |
| von 63 bis 125 µm | 1,0 |
| > 125 µm | 0 |

Aus der erzeugten trockenen Formmasse werden Sinterplatten, wie oben beschrieben, gefertigt. Die an diesen
Sinterplatten gefundenen Werte sind ebenfalls in nachfolgender Tabelle aufgeführt.

Vergleichsversuch B und Beispiele 5 bis 7

Ein Gemisch aus

| | | |
|---|---|---|
| 100 | Gew.-Teilen | Vinylchlorid |
| 200 | Gew.-Teilen | entsalztem Wasser |
| 1 | Gew.-Teil | eines Ethylen-Vinylacetat-Copolymeri-sates, das 45 Gew.-% polymerisierte Vinylacetat- sowie 55 Gew.-% polymeri-sierte Ethylen-Einheiten enthält, und ein osmotisch gemessenes mittleres Mole-kulargewicht von 10 bis 30 000 aufweist, |
| 0,2 | Gew.-Teilen | Methylhydroxypropylcellulose, deren 2 gew.-%ige wäßrige Lösung bei 20 °C eine Viskosität von 50 mPa·s aufweist, |
| 0,02 | Gew.-Teilen | n-Alkansulfosäure mit verschiedenen Kettenlängen von $C_{12}$ bis $C_{14}$ mit einem überwiegenden Gehalt an $C_{14}$, |
| 0,04 | Gew.-Teilen | Diisopropylperoxydicarbonat |

wird in einem Rührautoklaven von 400 dm³ Inhalt aus $V_4A$-
Edelstahl 4 Stunden bei 20 °C gerührt, um das Ethylen-

Vinylacetat-Copolymerisat vollständig im monomeren Vinylchlorid zu lösen. Anschließend wird das Gemisch unter weiterem Rühren auf 55 °C erwärmt und bei dieser Temperatur bis zu einem Druckabfall auf 0,4 mPa polymerisiert. Nun wird entspannt und im Falle von Beispiel 6 der gebildeten feinkörnigen Polymerisatsuspension die in der Tabelle angegebenen Stoffe in den genannten Mengen (Gew.-%, bezogen auf trockenes Polymerisat) zugesetzt. Anschließend wird die Mischung nach üblichen Verfahren von restlichem monomerem Vinylchlorid befreit und mittels einer Dekanterzentrifuge das Polymerisat von der Hauptmenge der wäßrigen Polymerisationsflotte getrennt. Im Falle des Vergleichsversuches B und der Beispiele 5 und 7 erfolgt die Zugabe der in der nachfolgenden Tabelle nach Art und Menge angegebenen Stoffe erst nach Entfernen der restlichen Monomeren aus der Polymerisationsmischung und dem Dekantieren durch Aufsprühen einer wäßrigen Lösung, die 5 Gew.-% der in der Tabelle genannten Stoffe enthält, auf das durch Rühren bewegte dekanterfeuchte Polymerisat. In allen Fällen enthält das erhaltene Produkt noch ca. 20 Gew.-%, bezogen auf das Produkt, Wasser. Es wird nun in einem Trockner mit Heißluft (Eingang 150 °C, Ausgang 85 °C) getrocknet.

An der so erhaltenen Formmasse werden folgende Eigen-schaften ermittelt:

| | |
|---|---|
| K-Wert | 69,5 |
| Schüttgewicht (g/l) | 595 |
| Weichmacheraufnahme | |
| Dicoctylphthalat (Gew.-%) | 11,2 |
| mittlerer Korndurchmesser (µm) | 30 |
| Siebanalyse (%) < 33 µm | 74,9 |
| von 33 bis 63 µm | 24,3 |
| von 63 bis 125 µm | 0,7 |
| > 125 µm | 0,1. |

Von dieser Formmasse werden Sinterplatten, wie oben beschrieben, hergestellt und an diesen die Eigenschaften bestimmt, die in nachfolgender Tabelle aufgeführt sind.

Vergleichsversuch C und Beispiel 8

Ein Gemisch, bestehend aus

80      Gew.-Teilen Vinylchlorid
17      Gew.-Teilen 2-Ethylhexylacrylat
3       Gew.-Teilen Vinylacetat
200     Gew.-Teilen entsalztem Wasser
0,4     Gew.-Teilen Methylhydroxypropylcellulose, deren
        2 gew.-%ige wäßrige Lösung bei 20 °C
        eine Viskosität von 50 mPa·s aufweist,
0,1     Gew.-Teilen Polyoxyethylen-sorbitanmonolaurat
0,06    Gew.-Teilen Di-2-ethylhexyl-peroxydicarbonat

wird in einem druckfesten Kessel aus Edelstahl, der mit einem Impellerrührer ausgerüstet ist, bei 53 °C unter Rühren bei autogenem Druck des Vinylchlorids bis zu einem Druckabfall auf 0,4 Pa polymerisiert. Dann wird entspannt, die anfallende feinkörnige Polymerisat-Suspension nach bekannten Verfahren von restlichem monomerem Vinylchlorid befreit und mit einer Dekanterzentrifuge das Polymerisat von der Hauptmenge der wäßrigen Polymerisationsflotte getrennt. Das so erhaltene Produkt enthält noch ca. 20 Gew.-%, bezogen auf das Produkt, Wasser. Nun werden die in der Tabelle nach Art und Menge (Gew.-%, bezogen auf trockenes Polymeres) angegebenen Zusatzstoffe als 5 gew.-%ige wäßrige Lösung in feinverteilter Form mit dem wasserfeuchten Produkt vermischt und diese Mischung mit Heißluft getrocknet. An der so erhaltenen Formmasse werden folgende Werte ermittelt:

K-Wert                              71,2
Schüttgewicht (g/l)                 610
mittlerer Korndurchmesser (µm)      29

| Siebanalyse (%) | < 33 μm | 79,9 |
| | von 33 bis 63 μm | 20,1 |
| | von 63 bis 125 μm | 0,9 |
| | > 125 μm | 0,1. |

Von der Formmasse werden, wie oben beschrieben, Sinterplatten hergestellt und daran die in nachfolgender Tabelle aufgeführten Eigenschaften gemessen.

Die Vergleichsversuche A und B wurden analog den Verfahren der DE-OS 24 02 314 beziehungsweise 30 18 922 durchgeführt. Der Vergleichsversuch C entspricht dem in der deutschen Patentanmeldung P 32 47 472.5 vorgeschlagenen Verfahren.

In nachfolgender Tabelle sind die zuzusetzenden Säuren teilweise mit ihrer chemischen Formel, teilweise mit Abkürzungen angegeben, welche bedeuten:

DBS = Dodecylbenzolsulfosäure

AS = n-Alkansulfosäure mit verschienen Kettenlängen von $C_{12}$ bis $C_{16}$ mit überwiegendem Gehalt an $C_{14}$

MOBA = Phosphorsäuremono-2-butoxyethylester

MOIP = Phosphorsäuremono-isopropylester

Die zuzugebenden Netzmittel sind durch Buchstaben bezeichnet, welche bedeuten:

A = N-Cocosalkyl-N,N-Dimethyl-betain, wobei "Cocosalkyl" ein Alkylgruppengemisch folgender Kettenlängenverteilung (in Prozent) bedeutet: $C_8 = 7$; $C_{10} = 6$; $C_{12} = 51$; $C_{14} = 19$; $C_{16} = 8$; $C_{18} = 9$.

B = Polypropylenglykol mit einem mittleren Molekulargewicht von 750.

C = Polyethylenglykol mit einem mittleren Molekulargewicht von 2000.

D = Blockcopolymerisat von Propylenoxid und Ethylenoxid, welches 10 Gew.-%, bezogen auf das Polymerisat polymerisierte Ethylenoxid-Einheiten enthält.

E = Alkoxyliertes Alkanolgemisch, wobei die Kettenlänge des Alkans $C_{13}$ bis $C_{15}$ beträgt, und die Alkohole durchschnittlich 6 Ethylenoxidgruppen gebunden enthalten.

F = Polyoxyethylen-sorbitanmonolaurat.

In der 6. und 7. senkrechten Spalte der Tabelle ist durch Ankreuzen vermerkt, ob die Zugabe der in der 2. bis 5. senkrechten Spalte verzeichneten Stoffe vor oder nach der Abscheidung des Polymeren durch Zentrifugieren erfolgt. Wie bereits oben mehrfach vermerkt, bezieht sich die Angabe in Gew.-% auf trockenes Polymerisat.

T A B E L L E

| Ver-gleichs-versuch Beispiel Nr. | Nachbehandlung Säure | | Zugabe von: Netzmittel | | zugegeben: vor / nach Abscheidung des Polymeren | | Eigenschaften der Sinterplatte | | | | |
|---|---|---|---|---|---|---|---|---|---|---|---|
| | Art | Menge Gew.-% | Art | Menge Gew.-% | vor | nach | Reiß-festig-keit N/mm² | Reiß-dehnung % | spez. Wider-stand mΩ/dm² | kapill. Steig-höhe cm | Farbe |
| A | DBS | 0,14 | – | – | – | + | 8,6 | 6,1 | 1,7 | 133 | 7 |
| 1 | $H_3PO_3$ | 1 | D | 1 | + | – | 14,2 | 11,6 | 1,7 | 105 | 1 |
| 2 | $H_2SO_4$ | 0,1 | B A | 0,2 0,05 | – | + | 12,9 | 11,9 | 1,6 | 98 | 2 |
| 3 | HCl | 3 | F | 1 | + | – | 11,5 | 9,9 | 1,5 | 100 | 2 |
| 4 | $H_3PO_4$ | 0,03 | E A | 0,1 0,03 | – | + | 12,8 | 11,3 | 1,4 | 97 | 1 |
| B | AS | 0,14 | A | 0,03 | – | + | 9,3 | 6,4 | 2,1 | 126 | 6 |
| 5 | MOBA | 0,1 | A | 0,03 | – | + | 12,2 | 10,6 | 1,6 | 101 | 1 |
| 6 | $HNO_3$ | 3 | E | 1 | + | – | 10,7 | 9,4 | 1,6 | 95 | 3 |
| 7 | MOIP | 0,1 | C F | 0,2 0,2 | – | + | 13,1 | 11,5 | 1,5 | 98 | 1 |
| C | – | – | A F | 0,03 0,2 | – | + | 4,6 | 10,3 | 4,5 | 98 | 6 |
| 8 | $H_3PO_4$ | 0,3 | A F | 0,03 0,2 | – | + | 7,6 | 16,3 | 1,4 | 103 | 1 |

Patentansprüche

1. Verfahren zur Herstellung einer sinterfähigen, feinteiligen Formmasse auf Basis von Polyvinylchlorid mit
einem K-Wert von 55 bis 90, einem Schüttgewicht von
400 bis 700 g/dm³, einer mittleren Korngröße von
10 bis 50 μm und einer Kornverteilung von:

99 bis 30 Gew.-% < 33 μm

1 bis 60 Gew.-% von 33 bis 63 μm

0 bis 9 Gew.-% von 63 bis 125 μm und

0 bis 1 Gew.-% > 125 μm

durch Homopolymerisation von Vinylchlorid oder Copolymerisation von Vinylchlorid mit einem Monomeren,
das mit Vinylchlorid copolymerisierbar ist, oder
Pfropfpolymerisation von Vinylchlorid mit einem Polymeren, das mit Vinylchlorid pfropfpolymerisierbar
ist, in wäßriger Suspension in Gegenwart von mindestens einem öllöslichen, radikalisch zerfallenden
Aktivator, mindestens einem Suspensionsstabilisator,
gegebenenfalls mindestens einem Emulgator und gegebenenfalls weiteren Polymerisations-Hilfsstoffen, nach
Beendigung der Polymerisation Abtrennen der Hauptmenge der wäßrigen Phase und Trocknung des Polymerisates, wobei vor der Trocknung dem Polymerisat mindestens ein nicht-ionogenes oder amphoteres Netzmittel
und mindestens ein weiterer Stoff zugegeben werden,
dadurch gekennzeichnet, daß als weiterer Stoff mindestens eine nicht oberflächenaktive Säure zugesetzt
wird, deren pKs-Wert in wäßriger Lösung bei 20 °C
höchstens 3 beträgt.

2. Verfahren nach Anspruch 1, dadurch gekennzeichnet,
daß eine bei 120 °C wenig flüchtige Säure zugesetzt
wird.

3. Verfahren nach Anspruch 1 oder 2, dadurch gekennzeichnet, daß die Säure nach Abtrennung der Hauptmenge der wäßrigen Phase dem Polymerisat zugesetzt wird.

4. Verfahren nach einem oder mehreren der Ansprüche 1 bis 3, dadurch gekennzeichnet, daß saure Verbindungen des Phosphors oder Schwefels als Säure eingesetzt werden.

5. Verfahren nach Anspruch 4, dadurch gekennzeichnet, daß saure Verbindungen des Phosphors als Säure eingesetzt werden.

6. Verfahren nach einem oder mehreren der Ansprüche 1 bis 5, dadurch gekennzeichnet, daß 0,01 bis 5 Gew.-%, bezogen auf trockenes Polymeres, von der Säure zugegeben werden.

7. Verwendung der nach einem oder mehreren der Ansprüche 1 bis 6 hergestellten Formmasse zur Erzeugung gesinterter Formkörper, insbesondere Separatorplatten für elektrische Zellen.